# EUROPEAN PATENT APPLICATION

(11) **EP 2 919 400 A1**
(43) Date of publication of application: **16.09.2015**
(21) Application number: 14305363.5
(22) Date of filing: 13.03.2014
(51) Int. Cl.: H04J 3/06

(54) **Method and device for forwarding a clock synchronization message**

(71) Applicant: ALCATEL LUCENT, 92100 Boulogne-Billancourt (FR)
(72) Inventor: Pauwels, Bart Joseph Gerard, 2018 Antwerp (BE)
(74) Representative: Louis Pöhlau Lohrentz

(57) **Abstract**

The present invention refers to a method (33) and device (29, ONT, CPE) for forwarding a clock synchronization message (M), the clock synchronisation message (M) comprising a time correction field (corr) describing an residence time of the clock synchronization message (M). In order to allow for accurate clock synchronization even in case of asymmetric delays within a network in a simple and efficient way, it is suggested that the method comprise determining (37) an arrival time (TA) of the message (M); calculating (41) a modified residence time (corr') that is adjusted based on an offset time (O) derived from the arrival time (TA); modifying (45) the clock synchronization message (M) so that the clock synchronization message (M) includes the modified residence time (corr'); and forwarding (47) the modified clock synchronization message (M') comprising the modified residence time (corr').

## Description

### Field of the invention

The present invention refers to a method and device for forwarding a clock synchronization message. The invention further refers to a forwarding arrangement comprising such a device.

### Background

Certain distributed systems like fixed or mobile access networks require that nodes of these distributed systems be precisely synchronized with each other. In some situations, synchronization accuracy in the order of microseconds or even nanoseconds is needed. The Precision Time Protocol (PTP) allows such high-accuracy synchronization. Frequency synchronization (in the context of PTP also referred to as "Syntonization") of a slave clock with a master clock may be achieved by the slave clock listening to time synchronization messages transmitted by the master clock. Phase synchronization is based on measuring a round trip delay between the master clock and the slave clock and estimating the one-way delay therefrom.

The accuracy of the delay estimation is impacted by variations of a processing delay introduced by network nodes arranged between the master clock and the slave clock. The variations of the processing delay may be a result of varying lengths of a packet queue of the network node or varying computing time needed for packet forwarding decisions. In order to compensate the disturbing effect on the delay estimation, PTP defines a Transparent Clock (TC) that may be implemented in a network node that forwards PTP messages. A transparent clock measures the overall residence time of a packet within the network node and adjusts a correction field of the PTP message to be forwarded using the measured residence time, when the packet leaves the node. Typically, the network node adds the measured residence time to a value stored in the correction field. The compensation field of a PTP message having passed multiple transparent clocks and arriving at its destination node message thus includes an accumulated residence time of the message, i.e. the sum of all residence times in each network node that has forwarded the PTP message.

A destination node of the PTP message may subtract the accumulated residence time e.g. from a timestamp or a measured delay in order to remove the impact of the processing delay from the estimated delay, thereby improving the accuracy of the delay estimation.

However, in current networks, residence time is measured and corrected for between the ingress and egress of a same node, whereby the ingress and egress time stamps use a wall clock with same Epoch, and same advancing pace.

In particular, access networks often have different delays in downstream communication and in upstream communication (asymmetric delays) because of particular, medium related transmission techniques between the network nodes at each end of the medium. A transparent clock confined to operation within one physical network node cannot compensate for these transmission delay asymmetries. Also the peer delay measurement mechanism described by the IEEE1588v2 standard cannot solve this issue as these asymmetrical delays may vary considerably from packet to packet.

### Summary

The object of the present invention is to provide a method and a device that allow for accurate clock synchronization even in case of asymmetric delays across sections between two or more nodes within a network. Moreover, the method and device should be simple to implement, require as little modifications to PTP as possible and work efficiently.

According to an embodiment of the present invention, a first method for forwarding a clock synchronization message is provided, the clock synchronisation message comprising a time correction field, a value of which describing an residence time of the clock synchronization message, the method comprising determining an arrival time of the message; calculating a modified residence time from the value of the time correction field and from an offset time derived from the arrival time; modifying the clock synchronization message so that the clock synchronization message includes the modified residence time; and forwarding the modified clock synchronization message comprising the modified residence time. In an embodiment, the method comprises receiving the clock synchronization message to be forwarded. The residence time may be a time during which the clock synchronization message was stored within a network node. In some cases, the clock synchronization passes multiple network nodes until it arrives at its destination node. In such cases, the residence time may be an accumulated residence time, i.e. the sum of the residence times of the message in the multiple nodes the message has passed. Although the modified residence time may not describe the (possibly accumulated) residence time directly, it is possible for a network element that receives the modified clock synchronization message forwarded by the method to determine a total residence time from the modified residence time. In an embodiment, the modified residence time may be stored in the time correction field of the modified clock synchronization message, i.e. the method may modify the clock synchronization message by replacing the residence time stored in the time correction field with the calculated modified residence time.

Because the method adjusts the residence time based on the offset time, which is calculated from a time of arrival, the modified clock synchronization message includes information about the arrival time. Thus, a receiving node that receives the forwarded modified clock synchronization message can determine the total residence time of the message within a forwarding arrangement including the transmitting node that executes the method, a receiving node and a transmission medium (e.g. electrical or optical transmission line) for transferring the message from the transmitting node to the receiving node. In other words, the forwarding arrangement provides a distributed transparent clock that includes the transmitting node, the transmission medium and the receiving node. The distributed transparent clock allows for precise clock synchronization even in case of asymmetric delays in the transmitting node, the transmission medium and/or the receiving node because the whole total residence time of the distributed transparent clock may be considered.

Moreover, the method can be implemented using already existing clock synchronization message format, e.g. exiting PTP message formats, without introducing additional messages. Even the definition of an additional extension field for the synchronization message is avoided. As a consequence, the method can be easily implemented and operates efficiently. The embodiments described herein are based on the inventor's finding that the residence time can be modified such that the modified residence time implicitly includes information about the arrival time without the need for additional explicit messages or additional message fields in the existing messages.

In an embodiment, the arrival time is measured using a local clock arranged for measuring a local time of a node that is executing the method. In this embodiment, a time stamp is created using the local clock, when the clock synchronization message is received. This timestamp describing the arrival time may be stored in a memory of the node or device executing the method so that the offset value can be derived from the timestamp.

In an embodiment, the offset time is a least significant portion of the arrival time. The arrival time may be a bit set. The least significant portion may be easily obtained by just selection a pre-defined number of least significant bits of the bit set.

In an embodiment, the offset time, e.g. the least significant portion of the arrival time, is a portion of the time of arrival describing an amount of time in a fractional second unit, preferably an amount of nanoseconds, since a last second roll-over of the local time. This embodiment is particularly well-suited when the arrival time is encoded by means of separate fields for seconds and nanoseconds, which is the case when using the timestamp representation specified the PTP standard.

In an embodiment, calculating the modified residence time includes subtracting the offset time from the residence time included into the clock synchronization message, which may correspond to a value of the correction field. In case that the clock synchronization message has already passed one or more PTP transparent clocks, the residence time included into the clock synchronization message received by the method typically describes the accumulated residence time of the message within the one or more transparent clocks.

In an embodiment, the method comprises including a least significant bit of a most significant portion of the arrival time in the modified clock synchronization message. Including said least significant bit into the clock synchronizations allows for detecting that a second roll-over has occurred which the clock synchronization was within the forwarding arrangement.

In an embodiment, the least significant bit of a most significant portion of the arrival time is included into the time correction field of the modified clock synchronization message. In another embodiment, any other bit of the clock synchronization message is used to hold the least significant bit of a most significant portion of the arrival time.

Although the methods described herein may be applied in connection with any clock synchronization protocol that has time synchronization messages that have a field that describe a residence time, in a preferred embodiment, the clock synchronization message is an event message according to the Precision Time Protocol (PTP).

According to another embodiment of the present invention, a device for forwarding a clock synchronization message is provided, the clock synchronisation message comprising a time correction field, a value of which describing a residence time of the clock synchronization message, wherein the device is operable for determining an arrival time of the message; calculating a modified residence time from the value of the time correction field and from an offset time derived from the arrival time; modifying the clock synchronization message so that the clock synchronization message includes the modified residence time; and forwarding the modified clock synchronization message comprising the modified residence time.

In an embodiment, the device is operable for executing the first method described herein.

According to yet another embodiment of the present invention, a second method for forwarding a clock synchronization message is provided, the clock synchronisation message comprising a time correction field the method comprising determining a transmission time of a modified clock synchronization message to be forwarded; calculating a modified residence time from a value of the time correction field and from an offset time derived from the transmission time; modifying the clock synchronization message so that the clock synchronization message includes the modified residence time; and forwarding the modified clock synchronization message comprising the modified residence time. The value of the time correction field may describe a time value such as the modified residence time determined by the first method. In an embodiment, the second method may modify the clock synchronization message by replacing value stored in the time correction field with the calculated modified residence time.

In an embodiment, calculating the modified residence time includes adding the offset time to the residence time. It should be noted that the offset time determined by the second method differs from the offset time calculated by the first method because the clock synchronization is processed by the second method at a later point in time than by the first method. In any case, the residence time modified by the second method reflects the total residence time of the clock synchronization message within the forwarding arrangement (i.e. the distributed transparent clock), possibly including the residence time within other transparent clocks before entering the section covered by the distributed transparent clock and the residence time of any nodes within the section covered by the distributed transparent clock.

In an embodiment, the method comprises extracting a least significant bit of a most significant portion of an arrival time encoded into the clock synchronization message, determining a corresponding least significant bit of a most significant portion of the transmission time and detecting a roll-over of the low significant portion (e.g. a second roll-over) if the two least significant bits differ from each other. When a roll-over has been detected then a value corresponding to one second has to be added to the residence time.

According to still another embodiment of the present invention, a device for forwarding a clock synchronization message is provided wherein the device is operable for determining a transmission time of a modified clock synchronization message; calculating a modified residence time from a value of the time correction field and from an offset time derived from the transmission time; modifying the clock synchronization message so that the clock synchronization message includes the modified residence time; and forwarding the modified clock synchronization message comprising the modified residence time.

In an embodiment, the device is operable for executing the second method described herein.

According to a further embodiment of the present invention, a forwarding arrangement for forwarding a clock synchronization message comprising a time correction field is provided, wherein the arrangement comprises a first network node operable for forwarding the synchronization message to a second node of the arrangement, the second network node being operable for transmitting the forwarded synchronization message to outside a section of a network covered by a distributed transparent clock function provided by the forwarding arrangement, wherein the first node comprises a device for executing the first method and the second node comprises a device for executing the second method.

In an embodiment, the first and the second nodes have local wall clocks that are synchronized with each other. These clocks may be synchronized by synchronization approaches that are specific to a transmission medium or system that connects the two devices with each other. For example, the frequency, phase and time synchronization may be based on standardized, medium specific mechanisms as for Passive Optical Network (PON) or Digital Subscriber Line (DSL) systems.

In an embodiment, the first node and the second node have local wall clocks that are both synchronized to a third master clock node in a network accessible by the first node and the second node. In a preferred embodiment, the third master clock generates at least some clock synchronization messages to be forwarded by the methods end devices described herein. Although synchronizing the two nodes with the third master clock node is not mandatory, such synchronization improves the accuracy of the distributed transparent clock. In addition, synchronization with the third node is a way to achieve clock synchronization between the first node and the second node.

In an embodiment, the arrangement is operable for forwarding Precision Time Protocol Event Messages in order to provide a Transparent Clock according to the Precision Time Protocol.

### Brief description of the figures

Exemplary embodiments and further advantages of the present invention are shown in the Figures and described in detail hereinafter.
- Figure 1: shows clock synchronization using the Precision Time Protocol (PTP) in a fixed access network;
- Figure 2: shows distributed transparent clocks;
- Figure 3: shows a flowchart of a first method for forwarding a clock synchronization message;
- Figure 4: shows details of an operation of the first method;
- Figure 5: shows a flowchart of a second method for forwarding a clock synchronization message; and
- Figure 6: shows details of an operation of the second method.

### Description of the embodiments

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

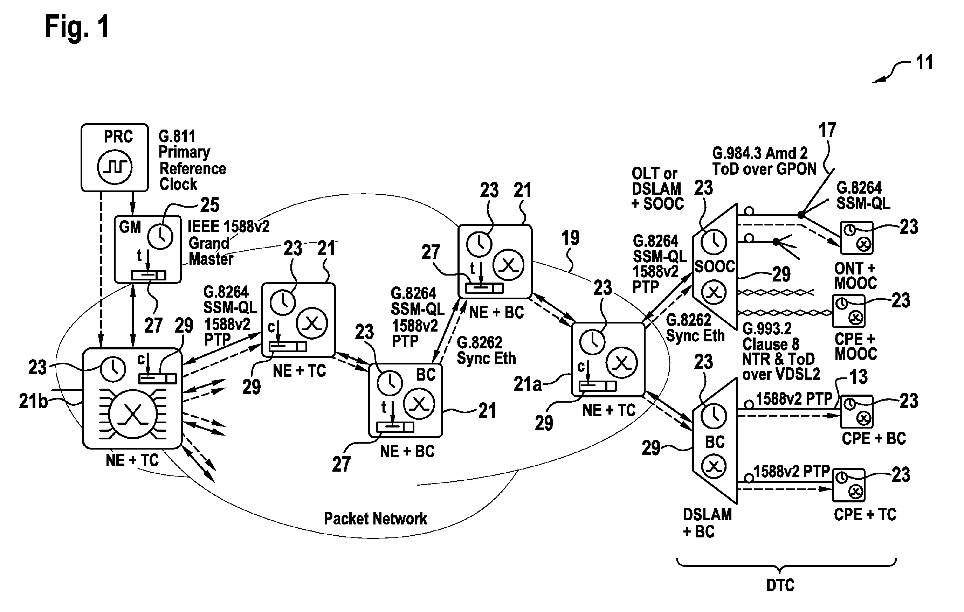

Figure 1 shows a fixed access network 11 comprising electrical access lines 13 arranged between DSL Access Multiplexer DSLAM and Customer Premises Equipment CPE. The access network 11 further comprises optical access lines 17 arranged between an Optical Line Termination OLT and Optical Network Terminations ONT. The optical access lines 17 have a tree structure forming a Passive Optical Network (PON). In the shown embodiment, the Passive Optical Network has a bitrate in the order of Gigabits/s and is therefore referred to as Gigabit PON (GPON).

Both the DSLAM as well as the OLT are connected to a node 21a of a packet network 19 of the access network 11 e.g. by optical links. As shown in Figure 1, the node 21a may be connected to other nodes 21 of the network 11 so that the node 21 can communicate with a further node 21b that may be connected to a wide area network such as the Internet (not shown). Therefore, the ONTs and the CPEs (and further nodes connected to the ONT or CPE) have access to the wide area network over the packet network 19.

The access network 11 has a time synchronization mechanism for synchronizing local clocks 23 of at least some network elements (NE) 21a, 21b, 21, OLT, DSLAM, ONT, CPE with a master clock 25 of the access network. The time synchronization mechanism is based on the Precision Time Protocol (PTP) specified in the IEEE standard 1588-2008, which corresponds to the international standard IE 61588. The document IEEE 1588-2008 is further referred to as the PTP standard. Using the terminology defined in the PTP standard, the master clock 25 is also referred to as Grand Master clock (GM).

Unlike the local wall clocks 23 of the individual network elements NE, the master wall clock 25 has direct access to a precise time base that may be provided by a primary reference clock PRC. The PRC provides a precise reference frequency source as well as a Time of Day (ToD) according to a predefined time scale (e.g. UTC, TAI, GPS time scale, etc.). In an embodiment, the primary reference clock PRC includes a Global Positioning System (GPS) receiver for receiving time information from the GPS.

The master clock 25 is operable for transmitting time synchronization messages that contain a time stamp that specifies the transmission time of the message measured by the primary reference clock PRC. To this end, the master clock comprises a time stamping arrangement 27 that inserts the transmission time into a field of the synchronization message. In another embodiment, the timestamp is not included in the synchronization message but sent in a separate follow-up message transmitted after the synchronization message. Using a follow-up message allows using hardware that is capable to determine the timestamp for a message but cannot include it into this message. According to the PTP standard, time stamping is applied to PTP event messages. Besides the event messages, PTP uses general messages to which time stamping is not applied and that do typically not contain a timestamp.

As shown in Figure 1, some nodes 21, 21b of the network 11 include a Transparent Clock (TC). A transparent clock is a correction mechanism specified in the PTP standard that allows for determining the accumulated residence time of synchronization messages within network nodes. To this end, a transparent clock TC measures the residence time of a synchronization message and adds the measured residence time to a correction value stored in a correction field of the message by means of a residence time correction arrangement 29. In case that the message traverses multiple transparent clocks TC, a correction value stored in the correction field of the message is augmented several times with the respective residence time; and when the message leaves the last transparent clock on its way to a destination node, its time correction field describes the accumulated residence time. The local wall clock 23 of a transparent clock TC may or may not be aligned in phase and time with the master wall clock 25.

Other nodes 21 of the network 11 may include a PTP Boundary Clock (BC). A boundary block synchronizes its local wall clock 23 with the master wall clock 25 using PTP event messages and allows other nodes 21 to synchronize their local clocks 25 with the local clock 21 of the boundary clock BC. A boundary clock BC has a time stamping arrangement 27 that functions at least similarly as the time stamping arrangement 27 of the grand master clock GM.

As can be seen in Figure 1, some nodes 21 (also referred to as Network elements NE) of the exemplary network 11 shown therein function as a transparent clock TC and other nodes 21 function as a boundary clock BC. The boundary clock and different types of transparent clocks TC are described in section 6.5 of the PTP standard. According to the PTP standard, both the boundary clock as well as the transparent clock are single network nodes.

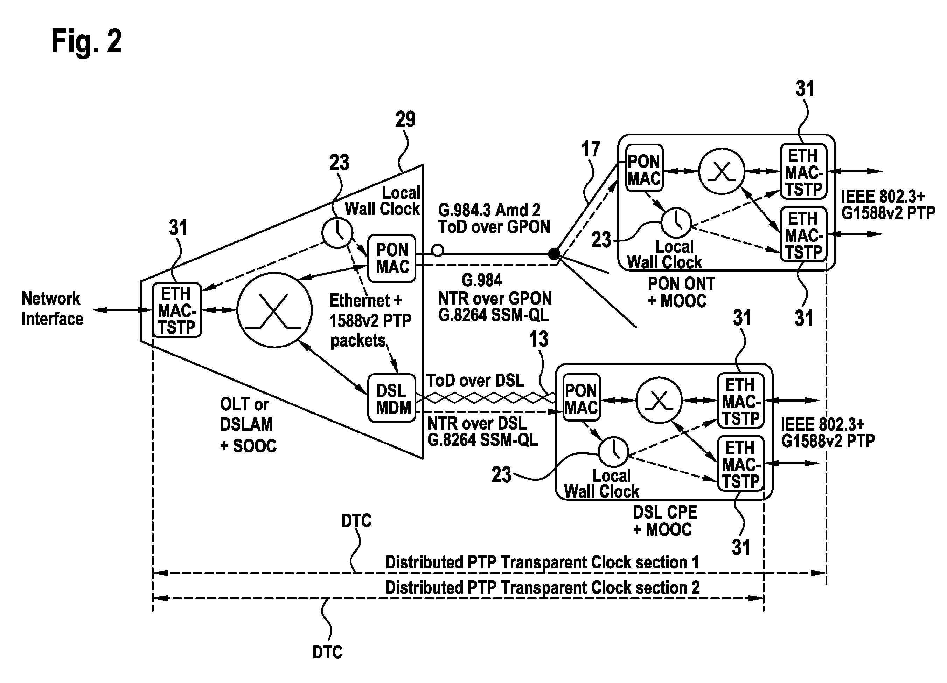

Transmission characteristics at the subscriber lines 13, 17 are asymmetrical. As a consequence, at least in some situations, a transmission delay in downstream direction (from the DSLAM or OLT to the CPE or ONT) is different from a transmission delay in upstream direction (from the CPE or ONT to the DSLAM or OLT). This asymmetry decreases the accuracy of time synchronization between e.g. the master clock GM or a boundary clock BC and a clock in the ONT or CPE or in nodes of networks connected to the ONT or CPE. In order to avoid accuracy problems due to this asymmetry, the network 11 has a distributed transparent clock DTC that includes the DSLAM, an electrical subscriber line 13 and the CPE connected to that subscriber line 13. Another distributed transparent clock DTC includes the OLT, the optical subscriber line 17 and the ONT connected to that subscriber line. Embodiments of distributed transparent clocks DTC are shown in more detail in Figure 2.

In Figure 2, a single access node 29 has interface circuitry for both GPON and DSL, whereas the embodiment shown in Figure 1 has two separate access nodes 29 for the DSL access network and the PON, respectively. An OLT is connected to the access node 29 via a PON and a DSL CPE is connected to the access node 29 via an electrical digital subscriber line DSL. The local clocks 23 of the ONT and the CPE are synchronized with the local clock 23 of the access node 29 using synchronization mechanisms that are specific to the respective subscriber line technology (that is specific to GPON and DSL, respectively). Network interfaces labeled with the reference sign 31 constitute external interfaces with respect to the distributed local clocks DTC provided by the access node 19 and the ONT as well as the access node 19 and the CPE. Although the network interfaces 31 may be of any technology, in the shown embodiment, the interfaces 31 are Ethernet (IEEE 802.3) interfaces. From the perspective of PTP, the elements 29 and ONT function together as a transparent clock. An event message transmitted from the interfaces 31 contains a modified correction field reflecting the residence time of the event message within the whole distributed transparent clock DTC. In the DSL part of the network 11, the elements 29 and CPE provide at their interfaces 31 a transparent clock according to the PTP standard, too.

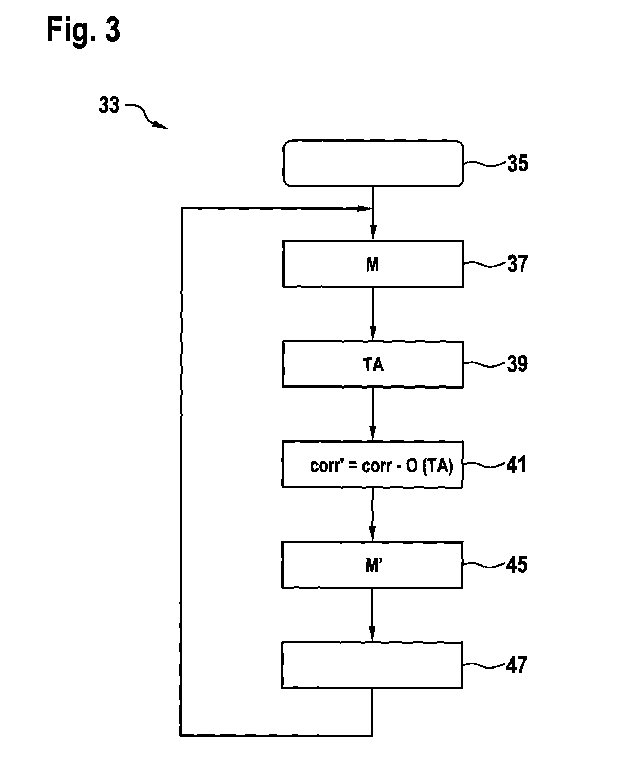

Figure 3 shows a flowchart of a first method 33 for forwarding a clock synchronization message, e.g. a PTP event message, comprising a time correction field. The first method 73 may be executed by a node of the distributed transparent clock DTC that receives the clock synchronization message from outside of the distributed transparent clock. In the example shown in Figure 2, downstream clock synchronization messages are received by the interface 31 of the access node. Thus, the first method 33 may be carried out on clock synchronization message received via the interface 31 of the access node 29. Upstream clock synchronization messages enter the respective distributed transparent clock DTC via an interface 31 of the ONT or the CPE. Accordingly, the ONT or the CPE may execute the first method 33 for clock synchronization messages received on one of their interfaces 31.

After a start 35, the first method 33, performs a step 37 for receiving the time synchronization message M. A step 39 of the first method 33 determines an arrival time TA of the time synchronization message at the receiving interface 31. Step 39 may include retrieving a momentary value of the local clock 23 of the node that has received the message and that is executing the first method 33. The retrieved momentary value corresponds to arrival time TA of the message M.

A subsequent step 41 of the first method 33 adjusts a value corr of the time correction field of the message M. Although the present invention may be applied in connection with any clock synchronization protocol that uses messages that have the correction field describing a residence time of the message M within a node or a region of a communication network, embodiments described herein refer to PTP. Accordingly, the clock synchronization messages may be PTP event messages. The time correction field of a PTP event message (in the PTP standard referred to as *correctionField*) is a signed integer value corr representing a time interval in increments of 1/65536 ns. The signed integer value has a size of 64 bits.

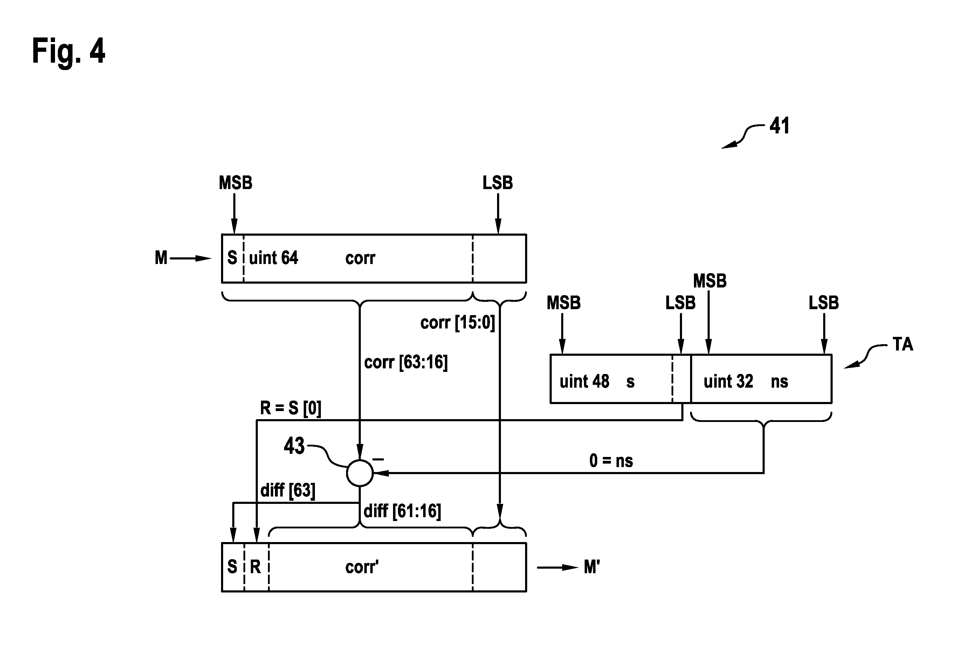

In Figure 4 - which illustrates the operations of step 41 in more detail - the correction field is shown twice. The correction field corr shown on the top of Figure 4 is the correction field of received clock synchronization message M while the correction field corr' shown at the bottom of Figure 4 is a modified correction field to be included into the clock synchronization message M' to be forwarded to another node of the distributed transparent clock DTC. It should be noted that clock synchronization messages including such a modified correction field corr' are communicated between nodes of the distributed transparent clock that use the forwarding methods 33, 45 described herein.

Besides the original and modified correction field, Figure 4 shows the arrival time TA. In the shown embodiment, the arrival time is represented in the same way as time stamps used in PTP event messages. That is, the arrival time comprises a 48 bits long seconds field s and a 32 bits long nanoseconds field ns. Both fields are represented as unsigned integer values. In other embodiments a different representation of the arrival time TA is used. For example, the length of the fields of the arrival time TA may be modified. The resolution of the arrival time may be changed (using increments of multiple ns or a fraction of ns rather than using a resolution of one ns). Moreover, a single field may be used instead of two fields. Regardless of its exact implementation, the arrival time TA can be considered as a time stamp that is generated using the local clock 23 of the node 21 that executes the first method 33 and stored in a memory of this node 21.

In general, a low significant portion and a high significant portion can be constructed from the arrival time TA. Each bit of the high significant portion has a higher significance than every bit of the lower significant portion. The time correction field describes the length of a time interval, where a maximum absolute value of this length may be less than a valid time value of the arrival time TA. For example, the correction field used in PTP can encode a maximum value of about 78 hours. The absolute time, however, encoded in the arrival time TA is the time since the epoch of the used time scale (e.g. the time since December 31, 1969, 23:59:50).

As can be seen in Figure 4, an offset value O is derived from the arrival time TA in step 41. In addition, step 41 comprises adjusting the content of the correction field corr based on the offset value O. In the shown embodiment, an offset time described by the offset value is subtracted from the time described by the correction value.

The offset value O may be the low significant portion of the arrival time TA. In order to avoid an overflow when adjusting the residence time (e.g. by subtracting or adding), the low significant portion should be pre-selected such that a time value of the low significant portion can be encoded in the time correction field. When using the PTP, the low significant portion should never exceed the above-mentioned maximum value of about 78 hours. In the shown embodiment, the first method 33 uses the nanoseconds field ns as the low significant portion. The remaining bits of the arrival time TA, i.e. the seconds field s, is considered to be the high significant portion of the arrival time TA. The high significant portion is not used for adjusting the residence time.

However, it is possible to define the high significant portion and the low significant portion in a different way. For example, all bits of the nanoseconds field and one bit of the seconds field s could constitute the low significant portion. In another example, only some of the bits of the nanoseconds field ns form the low significant portion. Moreover, constructing the high significant portion and the low significant portion need not correspond to subdividing the arrival time between adjacent bits. In an embodiment, the low significant portion may correspond to minutes of the arrival time and the high significant portion may correspond to hours. However, calculating so defined low significant and high significant portions from the arrival time shown in Figure 4 would require comparatively complex operations.

In the shown embodiment, subtracting the arrival time TA from the residence time is accomplished by subtracting the nanoseconds field ns of the arrival time from a non-fractional part (bits 63 to 16) of the time correction field, e.g. by means of a subtractor 43. The fractional part (bits 15 to 0) of the time correction field corr is not modified in the shown embodiment because the resolution of the arrival time TA is limited to ns increments. A result diff[63:16] of this subtraction is copied into the 48 most significant bits of the modified correction field corr.

In the shown embodiment, one pre-defined bit of the modified correction field corr' does not correspond to one of the bits of the result diff but includes the least significant bit R of the high significant portion of the arrival time. In the shown embodiment, this bit R correspond to the least significant bit (i.e. bit 0) of the seconds field s. The R bit allows for detecting a second roll-over of the local time of the distributed transparent clock DTC while the modified time synchronization message M' circulates within the distributed transparent clock.

Any bit position within the time correction field corr that is not critical for accurate encoding of the residence time may be used to hold the bit R. In the shown embodiment, the bit position next to the sign bit S (i.e. bit 62) of the correction field corr is used to hold the R bit. In another embodiment, one of the fractional bits corr[15:0] of the correction field may be used to hold the R bit.

The result of step 41 is the modified correction field corr'. In the shown embodiment, the modified correction basically reflects the difference of the original residence time (as indicated in the correction field of the original time synchronization message M received in step 37) and the low significant portion of the arrival time TA. Furthermore, the modified correction field may include the R bit.

A step 45 of the first method 33 replaces the correction field corr of the received message M with the modified correction field corr' thereby creating a modified clock synchronization message M'. In the shown embodiment all fields of the clock synchronization message M except the correction field corr are left unmodified when generating the modified clock synchronization message M' from the received clock synchronization message M.

In a step 47 of the first method 33, the modified clock synchronization message is forwarded to another node 21 of the distributed transparent clock DTC. After the completion of step 47, the method 33 may return to step 37 so that the next clock synchronization message M can be processed.

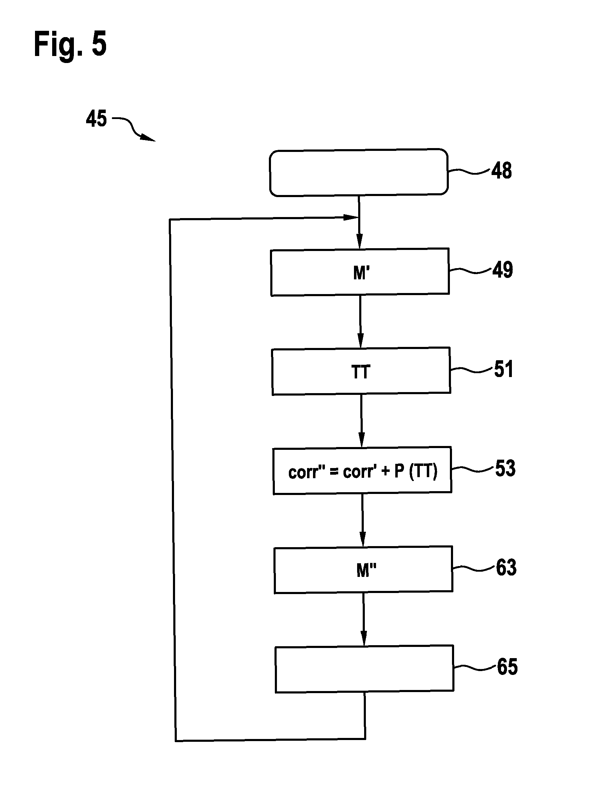

The other node 21, which to which the node 21 executing the first method 33 forwards one or more modified clock synchronization messages M', may operable for executing a second method 45. A flowchart of the second method 45 is shown in Figure 5.

After a start 48 of the second method 45, the second method 45 executes a step 49 for receiving the modified clock synchronization message (e.g. a PTP event message) which may have been forwarded by a node 21 of the distributed transparent clock DTC. A step 51 of the second method 45 determines a transmission time TT of a further modified synchronization message M" to be transmitted by the second method 45.

The second method 45 comprises an adjusting step 53 for adjusting the time correction field corr of the received message M' based on a further offset value P calculated from the transmission time TT.

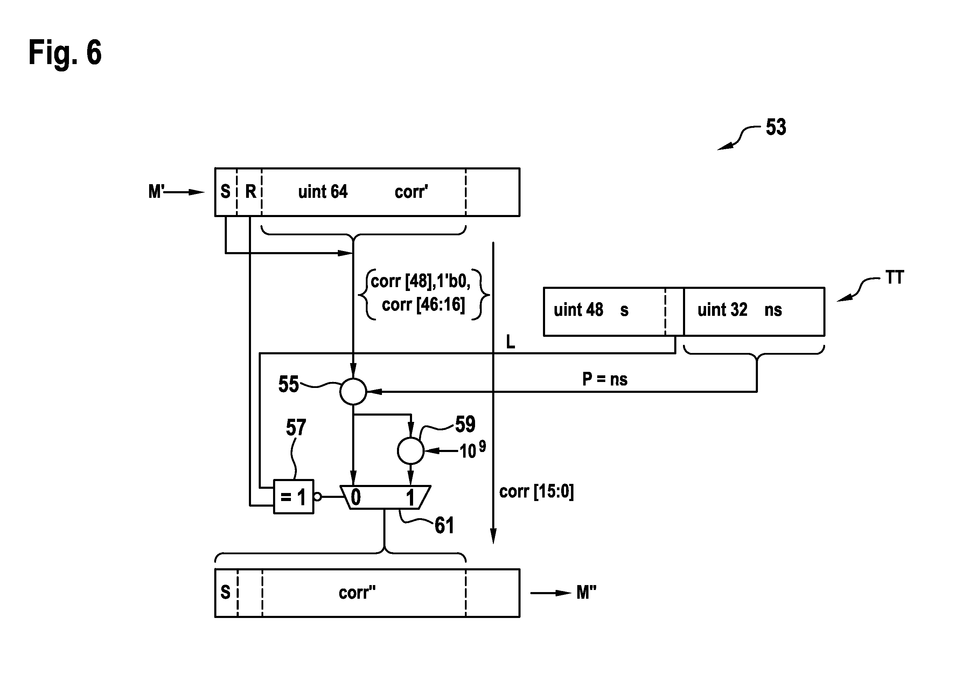

The operations of the adjusting step 53 are shown in more detail in Figure 6. Similarly to the first method 33, the second method 45 modifies the received clock synchronization message M' by replacing the correction field corr' (shown on the top of Figure 6) of this message M' with a further modified correction field corr" (shown at the bottom of Figure 6). The transmission time TT has the same representation as the arrival time TA in the first method 33 (e.g. the timestamp format of PTP). Moreover, the local clocks of the two nodes executing the two methods 33, 45 are synchronized with each other using a technology specific synchronization method that operates independently of PTP and that may be restricted to nodes of the distributed transparent clock DTC. One example of such a technology specific synchronization method is Synchronous Ethernet as specified in the ITU-T Recommendations G.8261, G.8262 and G.8264.

Furthermore, a technology specific clock synchronization mechanism may be implemented based on the Network Time Reference (NTR) used in DSL systems. The NTR is specified in the standards related to the individual variants of DSL (e.g. ITU-T Recommendations G.992.1, G.992.2, G.992.3, G.992.5).

The further offset value P is calculated in the same manner as the offset value O used in the first method 33. In the shown embodiment, the further offset value P corresponds to the nanoseconds field ns of the transmission time TT.

For calculating the further correction field corr", the received modified correction field is used, with the bit position that holds the R bit being replaced with a zero bit. In the shown embodiment, the R bit is stored in the bit 62 of the modified correction field, i.e. in the bit position next to the sign bit S. Accordingly, bit 62 is replaced with "0" for the sake of adjusting the residence time. The residence time stored in the modified correction field corr' is adjusted by adding the modified correction field corr' with the bit R replaced with "0" and the offset value P. This addition may be performed by a first adder 55.

The R bit is used to handle cases where a second roll-over occurs in the synchronized local clocks of the two nodes of the distributed transparent clock DTC. To this end, an XOR operation is performed on the R bit and the least significant bit L of the high significant portion of the transmission time TT. In the shown embodiment, the high significant portion corresponds to the seconds field s of the transmission time TT. Thus, said least significant bit L is the least significant bit of the seconds field s of the transmission time TS.

If the result of the XOR operation is one then the result of the addition performed e.g. by the adder 55 is used as the new value of bits 63 to 16 of the further modified correction field corr". Otherwise, a value corresponding to one second is added to the result of the addition. Since the shown example of the second method 45 modifies the bits of the modified correction field corr' that correspond to a non-fractional part of the residence time only, the value to be added is 1 · 10⁹. The result of the latter second addition is then used as the new value bits 63 to 16 of the further modified correction field corr". As shown in Figure 6, bits 15 to 0 describing a fractional part of the residence time expressed in ns are copied into the further modified correction field corr" without being modified because the resolution of the local clock 23 and therefore the transmission time TT is limited to 1 ns.

The additional correction for handling second roll-overs is illustrated in Figure 6 by an XOR gate 57 a second adder 59 and a multiplexer 61. The multiplexer 61 is controlled by an output of the XOR gate such that it selects the result of the addition performed by the first adder 55 if the result of the XOR operation is zero. Otherwise, the multiplexer 61 selects the result of the second addition performed by the second adder 59.

A step 63 of the second method 45 (see Figure 5), creates a further modified clock synchronization message M" by replacing the correction field corr' of the received synchronization message M' with the further modified correction field corr" calculated in step 53. Basically, the further modified correction field corr" corresponds to the modified correction field corr' with the local time subtracted. In the shown embodiment of the second method 45, all fields of the received modified clock synchronization message M' except the modified correction field corr' are left unmodified.

The second method 45 then executes a step 65 for forwarding the further modified clock synchronization message M" to a node 21 of the network 11 that is not part of the distributed transparent clock. Then, the second method 45 continues with step 49 for processing the next clock synchronization message.

It should be noted that the clock synchronization messages M and M" that are exchanged between the distributed transparent clock DTC and nodes outside of the transparent distributed clock DTC comply with the PTP standard. As a consequence, the distributed transparent clock behaves (from the point of view of the nodes outside of the distributed transparent clock) like a non-distributed transparent clock described in the PTP standard. The clock synchronization messages exchanged within the distributed transparent clock have the same format as conventional PTP messages. However, the correction field is interpreted differently. Therefore, the two methods 33, 45 allow for implementing a transparent clock relying on existing PTP message formats without introducing additional message types. Thus, such the distributed transparent clock is simple to implement.

It should be further noted that the clocks, e.g. the local clocks 23, described therein may be wall clocks. A wall clock is a function or device that provides absolute time information, e.g. calendar time information and/or time of day information. In addition, a wall clock may provide frequency and/or phase information. For example, the arrival time TA and/or the transmission time TT may be absolute time information provided by the local clock 23 of the respective node 21.

Both methods 33, 45 may be implemented in software, hardware or any combination of software and hardware. In an embodiment at least the operations for replacing the correction field shown in Figures 4 and 6 are implemented at least partially in hardware. Using a hardware-supported implementation for replacing the correction field has a better accuracy than an implementation that is base on software only. For example, the methods 33, 45 may be implemented in a protocol entity of any node 21 of the network, in particular of the access node 29 (e.g. OLT or DSLAM or combined access node 29 shown in Figure 2), the ONT and/or the CPE. The protocol entity may be a Media Access Control (MAC) protocol entity (e.g. MAC controller) or a physical layer protocol entity (e.g. transceiver).

## Claims

1. Method (33) for forwarding a clock synchronization message (M), the clock synchronisation message (M) comprising a time correction field (corr), the method (33) comprising
- determining (37) an arrival time (TA) of the message (M);
- calculating (41) a modified residence time (corr') from a value of the time correction field (corr) and from an offset time (O) derived from the arrival time (TA);
- modifying (45) the clock synchronization message (M), said modifying (45) comprising including the modified residence time (corr') in the clock synchronization message (M); and
- forwarding (47) the modified clock synchronization message (M').

2. Method (33) according to claim 1, wherein the arrival time is measured using a local clock (23) arranged for measuring a local time of a node (21) that is executing the method (33).

3. Method (33) according to claim 1 or 2, wherein the offset time (O) is a least significant portion (ns) of the arrival time (TA).

4. Method (33) according to one of the precedent claims, wherein the offset time (O) is a portion (ns) of the time of arrival (TA) describing an amount of time in a fractional second unit, preferably an amount of nanoseconds, since a last second roll-over of the local time.

5. Method (33) according to one of the precedent claims, wherein calculating the modified residence time (corr') includes subtracting (43) the offset time (O) from the residence time (corr').

6. Method (33) according to one of the precedent claims, wherein the method (33) comprises including a least significant bit (R) of a most significant portion (s) of the arrival time (TA) in the modified clock synchronization message (M').

7. Device (21) for forwarding a clock synchronization message (M), the clock synchronisation message (M) comprising a time correction field (corr), wherein the device (21) is operable for
- determining (37) an arrival time (TA) of the message (M);
- calculating (41) a modified residence time (corr') from a value of the time correction field (corr) and from an offset time (O) derived from the arrival time (TA);
- modifying (45) the clock synchronization message (M), said modifying (34) comprising including the modified residence time (corr') in the clock synchronization message (M); and
- forwarding (47) the modified clock synchronization message (M').

8. Device (21) according to claim 7, wherein the device (21) is operable for executing a method according to one of claims 1 to 6.

9. Method (45) for forwarding a clock synchronization message (M'), the clock synchronisation message (M') comprising a time correction field (corr'), the method (45) comprising
- determining (51) a transmission time (TT) of a modified clock synchronization message (M");
- calculating (53) a modified residence time (corr") from a value of the time correction field (corr') and from an offset time (P) derived from the transmission time (TT);
- modifying (63) the clock synchronization message (M'), said modifying (63) comprising including the modified residence time (corr") in the clock synchronization message (M'); and
- forwarding (65) the modified clock synchronization message (M").

10. Method (45) according to claim 9, wherein calculating the modified residence time (corr") includes adding (55) the offset time (P) to the residence time (corr').

11. Method (45) according to claim 9 or 10, wherein the method (45) comprises extracting a least significant bit (R) of a most significant portion (s) of an arrival time (TA) encoded into the clock synchronization message (M'), determining a corresponding least significant bit (L) of a most significant portion (s) of the transmission time (TT) and detecting a second roll-over if the two least significant bits (R, L) differ from each other.

12. Device (21) for forwarding a clock synchronization message (M'), the clock synchronisation message (M') comprising a time correction field (corr'), wherein the device (21) is operable for
- determining (51) a transmission time (TT) of a modified clock synchronization message (M");
- calculating (53) a modified residence time (corr") from a value of the time correction field (corr') and from an offset time (P) derived from the transmission time (TT);
- modifying (63) the clock synchronization message (M'), said modifying (63) comprising including the modified residence time (corr") in the clock synchronization message (M'); and
- forwarding (65) the modified clock synchronization message (M").

13. Device (21) according to claim 12, wherein the device (21) is operable for executing a method (45) according to one of claims 9 to 11.

14. Synchronization message forwarding arrangement (29, 17, 13, ONT, CPE) for forwarding a clock synchronization message (M) comprising a time correction field (corr), wherein the arrangement comprises a first network node (21) operable for forwarding the synchronization message (M') to a second node (21) of the arrangement, wherein the first node (21) comprises a device according to claim 7 or 8 and the second node (21) comprises a device according to claim 12 or 13.

15. Forwarding arrangement according to claim 14, wherein the first node (21) and the second node (21) have local clocks (23) that are synchronized with each other and/or that are both synchronized to a third master clock node in a network (11) accessible by the first node (21) and the second node (21).
